# EUROPÄISCHE PATENTSCHRIFT

(11) **EP 0 510 035 B1**
(45) Veröffentlichungstag und Bekanntmachung des Hinweises auf die Patenterteilung: **02.04.1997**
(21) Anmeldenummer: 91901784.8
(22) Anmeldetag: 21.12.1990
(51) Int. Cl.: C08F 4/40, C09J 4/00, C09D 4/00

(54) **NEUE UNTER LUFTAUSSCHLUSS LAGERSTABILE, RADIKALISCH POLYMERISIERBARE MEHRSTOFFGEMISCHE UND IHRE VERWENDUNG**
NEW RADICALLY POLYMERIZABLE MULTISUBSTANCE MIXTURES WITH LONG STORAGE LIFE AFTER EVACUATION OF AIR AND THEIR USE
NOUVEAUX MELANGES COMPLEXES STABLES SOUS EXCLUSION D'AIR, A POLYMERISATION RADICALAIRE, ET LEUR UTILISATION

(30) Priorität: 12.01.1990 DE 4000776
(43) Veröffentlichungstag der Anmeldung: 28.10.1992
(73) Patentinhaber: Henkel Kommanditgesellschaft auf Aktien, 40191 Düsseldorf (DE)
(72) Erfinder: HUVER, Thomas, Dr., W-4000 Düsseldorf 12 (DE); MÖLLER, Thomas, Dr., W-4000 Düsseldorf 13 (DE); KLAUCK, Wolfgang, Dr., W-4005 Meerbusch (DE); NICOLAISEN, Christian, W-3000 Hannover 91 (DE)
(86) Internationale Anmeldenummer: EP9002286
(87) Internationale Veröffentlichungsnummer: WO9110687

(56) Entgegenhaltungen:
- US-A- 3 630 962
- US-A- 4 112 146
- Chemical Abstracts, Band 83, no. 12, 22 September 1975, (Columbus, Ohio, US), Seite 46, Zusammenfassung 98578f, & JP-A-7549383
- Chemical Abstracts, Band 83, no. 8, 25 August 1975, (Columbus, Ohio, US), siehe Seite 104, Zusammenfassung 60654q, & JP-A-7509686
- Chemical Abstracts, Band 83, no. 12, 22 September 1975, (Columbus, Ohio, US), Seite 46, Zusammenfassung 98579g, & JP-A-7549384

## Beschreibung

Die Erfindung betrifft neue formgebend verarbeitbare radikalisch polymerisierbare Mehrstoffgemische, die beispielsweise als fließ-bzw. streichfähige oder als pastöse Massen zum Einsatz kommen und dann unter Umgebungsbedingungen und Auslösung der Polymerisationsreaktion bei Raumtemperatur und/oder erhöhten Temperaturen aushärten. Anwendungstechnisch gesehen betrifft die Erfindung dabei nahezu alle Gebiete des Einsatzes radikalisch polymerisierbarer bzw. härtbarer Massen. Beispielhaft seien erwähnt Klebstoffe, Dichtungsmassen, der gezielte Aufbau von Kunststoffformteilen, die Oberflächenbeschichtung mit lufthärtenden insbesondere lösungsmittelfreien Lacksystemen und dergleichen.

Die Peroxid- bzw. Hydroperoxid-initiierte Härtung olefinisch ungesättigter Systeme bedarf insbesondere dann ausgewählter Starter bzw. Aktivatorsysteme, wenn die Reaktionsauslösung bei niederen Temperaturen beispielsweise bei Raumtemperatur oder nur schwach erhöhten Temperaturen erfolgen soll. Bekannt ist beispielsweise, daß ausgewählten tertiären Aminverbindungen mit partiell aromatischer Substitution am N-Atom eine solche Aktivatorfunktion zukommt. Bekannte Aktivatoren für die Polymerisationsauslösung beispielsweise mittels Dibenzoylperoxid sind insbesondere Dimethylanilin und Dimethyl-p-Toluidin.

Eine ganz andere bekannte Aktivatorklasse für die oxidative Polymerisationsauslösung bestimmter ungesättigter Systeme, nämlich trocknender Öle, sind im System wenigstens anteilsweise lösliche Metallverbindungen solcher Metalle, die mit mehreren Wertigkeitsstufen auftreten können und über intermediär auftretende Wertigkeitsverschiebungen bei Interaktion mit weiteren Komponenten des System die Startreaktion beschleunigen. Schon seit langem sind derartige in organischen Lösungsmitteln und/oder in Bindemitteln hinreichend lösliche Metallverbindungen solcher Metalle als sogenannte Trockenstoffe zur Lufttrocknung von Anstrichmitteln, Firnissen und dergleichen auf Basis ungesättigter Öle bekannt. In Betracht kommen hier insbesondere hinreichend öllösliche Verbindungen solcher Obergangsmetalle, die zum Auftreten in mehreren Wertigkeitsstufen befähigt sind. Die Fähigkeit zur Härtungsbeschleunigung ist bei den einzelnen Komponenten unterschiedlich stark ausgeprägt. Vornehmlich kommen Verbindungen des Kobalts und/oder des Mangans in Betracht, aber auch Eisen wirkt härtungsbeschleunigend. Daneben und insbesondere in Kombination mit diesen hochwirksamen metallischen Komponenten können vergleichbare Verbindungen anderer Metalle eingesetzt werden, die gegebenenfalls auch zur Ausbildung mehrerer Wertigkeitsstufen befähigt sind. Eine ausführliche Darstellung solche Systeme findet sich beispielsweise in "Ullmann, Encyklopädie der technischen Chemie", 4. Auflage, Band 23 (1983), 421 bis 424.

Die US-Patentschriften 4,010,152 und 4,063,012 beschreiben die (Co)polymerisation ethylenisch ungesättigter Monomerer wie Vinylchlorid mit ausgewählten aliphatischen Alpha-(Hydroperoxy)azo-Verbindungen bzw. ihren Salzen, die gemäß der angegebenen Strukturformel der Stoffklasse der Hydrazon-Derivate zuzuordnen sind und als ausgewählte Hydrazonperoxide angesprochen werden können. Nach der Lehre der zuerst genannten Druckschrift werden sie durch Umsetzung von Alpha-Halogen-azoverbindungen mit Natriumperoxid oder Wasserstoffperoxid in Gegenwart von Säureaktzeptoren hergestellt und sollen dann zur Polymerisationsauslösung eingesetzt werden. Die überwiegende Zahl der Beispiele dieser Druckschrift sowie der parallelen zweiten genannten US-Patentschrift beschreiben die Herstellung der Hydroperoxidverbindungen auf einem Weg, der im Rahmen der allgemeinen Erfindungsbeschreibung nicht näher erläutert ist. Die jeweils ausgewählten Hydrazonverbindungen werden gelöst in einem Lösungsmittel mit einem Sauerstoffstrom derart begast, daß der Sauerstoff durch die bei Raumtemperatur oder leicht erhöhten Temperaturen gehaltene Lösung der Hydrazonverbindungen geleitet wird. Die jeweiligen Hydroperoxide werden in hohen Ausbeuten von 80 % oder mehr erhalten und gegebenenfalls durch Tieftemperaturkristallisation gereinigt. Die Hydroperoxide können als Startersysteme für die Polymerisation von beispielsweise Vinylchlorid oder ungesättigten Polyester-Styrolharzen eingesetzt werden.

Eine Reihe älterer Veröffentlichungen beschäftigt sich mit Verbindungen dieser Art und ihrer Entstehung insbesondere durch Autoxidation. Bereits im Jahre 1914 beschreiben M. Busch et al. die Autoxidation von Hydrazonen in Ber. 47 (1914) 3277 bis 3291. Formuliert wird hier die vermeintliche Bildung der Peroxide als eine Anlagerung eines Sauerstoffmoleküls an die C:N-Doppelbindung des Hydrazons unter Bildung eines peroxidischen Vierrings. Erneut wird die Autoxidation der Phenylhydrazone beschrieben in K. H. Pausacker, J. Chem. Soc. 1950, 3478 bis 3481. Untersucht wird hier die nichtkatalysierte Reaktion reiner Phenylhydrazone und die entsprechenden Reaktionen unter Zusatz einer geringen Menge an Benzoylperoxid als katalysierte Reaktion. Eine weiterführende Strukturaufklärung zur Konstitution der Hydrazonperoxide wird gegeben von R. Criegee et al., Ber. 84 (1951) 219 bis 224. Nachgewiesen wird hier, daß sich die Hydrazonperoxide - wenigstens bei Raumtemperatur oder entsprechend niedrigen Temperaturen - nur aus Derivaten von Hydrazinverbindungen bilden können, die am substituierten N-Atom noch ein Wasserstoffatom enthalten.

Die Erfindung geht von der Aufgabe aus, unter Benutzung des geschilderten vorbekannten Wissens neue Möglichkeiten für den praktischen Einsatz solcher Starter bzw. Aktivatoren und Aktivatorsysteme zu entwickeln, die zur Polymerisationsauslösung an olefinisch ungesättigten Systemen in vereinfachter Weise Verwendung finden können. Den Aktivatoren soll - in Abmischung mit radikalisch polymerisierbaren Stoffen bzw. Stoffgemischen der Praxis - die Fähigkeit immanent sein, durch Zutritt von Umgebungsluft aktivierbar zu sein. Diese Aktivierung soll in bevorzugten Ausführungsformen schon bei Raumtemperatur eintreten, gegebenenfalls ist eine Temperaturerhöhung vorgesehen. Ein besonders wichtiger Aspekt der Erfindung richtet sich auf Mehrstoffsysteme der genannten Art, die einfach durch Zutritt von Umgebungsluft bei Raumtemperatur zur Auslösung der Startreaktion einer radikalischen Polymerisation ungesättigter Systeme befähigt sind, und zwar bei zeitgesteuerter Aushärtung und vorbestimmbarer Topfzeit. Die Erfindung will in einer wichtigen Ausführungsform insbesondere einkomponentige lagerstabile Systeme schaffen, die in ihrer Applikationsform formbar, insbesondere pastös bis fließfähig sind und eine zur Verarbeitung hinreichende Topfzeit aufweisen, dann aber durch die einfache Einwirkung der Umgebungsluft formstabil aushärten.

Gegenstand der Erfindung ist dementsprechend in einer ersten Ausführungsform die Verwendung von Alkyl-, Cycloalkyl- undloder Aryl-Hydrazonen aliphatischer, cycloaliphatischer und/oder aromatischer Aldehyde und/oder Ketone, die zur Ausbildung von Hydroperoxiden befähigt sind und in Abmischung mit radikalisch polymerisierbaren Systemen auf Basis olefinisch ungesättigter Verbindungen vorliegen, als Starter oder Hauptkomponente in Startersystemen für die Aushärtung der olefinisch ungesättigten Verbindungen durch radikalische Polymerisation mittels Umgebungsluft ohne Zusatz eines Peroxids und ohne Verwendung von Aktivierungslicht. Die genannten Hydrazone leiten sich dabei von solchen Hydrazin-Derivaten ab, die am substituierten N-Atom noch ein Wasserstoffatom aufweisen. Sie werden der Einfachheit halber im nachfolgenden auch als "Hydrazon-Verbindungen" bezeichnet.

Gemäß dieser ersten Ausführungsform der Erfindung werden dabei die Hydrazonverbindungen bevorzugt zusammen mit im System wenigstens anteilsweise löslichen Metallverbindungen für die Trocknungsbeschleunigung ungesättigter Öle und/oder zusammen mit Reduktionsmitteln mit Beschleunigerwirkung für die radikalische Polymerisation eingesetzt und dabei insbesondere zur zeitgesteuerten Aushärtung vorbestimmbarer Topfzeit mittels Umgebungsluft bei Raumtemperatur und/oder erhöhten Temperaturen von formgebend verarbeitbaren Mehrstoffgemischen - bevorzugt im Zuge ihrer formgebenden Verarbeitung - verwendet, die die radikalisch polymerisierbaren olefinisch ungesättigten Komponenten gewünschtenfalls auch zusammen mit gelösten und/oder ungelösten Füll- und/oder Hilfsstoffen enthalten.

Gegenstand der Erfindung sind weiterhin in einer zweiten Ausführungsform formgebend verarbeitbare radikalisch polymerisierbare Mehrstoffgemische enthaltend
ethylenisch ungesättigte polymerisierbare Verbindungen gewünschtenfalls in Abmischung mit löslichen und/oder unlöslichen Füll- und/oder sonstigen Hilfsstoffen sowie
durch Sauerstoffzutritt initiierbare Starter bzw. Aktivatoren oder Aktivatorsysteme
wobei das Kennzeichen der Erfindung darin liegt, daß diese Mehrstoffgemische in Applikationsform als wenigstens schwach angedicktes Material vorliegen und durch Zutritt von Sauerstoff, insbesondere durch Einwirkung von Umgebungsluft initiierbare Starter auf Basis der zuvor genannten Hauptkomponenten enthalten.

Der Erfindung liegt die Erkenntnis zugrunde, daß es unter Berücksichtigung der im nachfolgenden im einzelnen beschriebenen Elemente gelingt, zusätzliche Freiheitsgrade für das praktische Arbeiten mit radikalisch polymerisierbaren Systemen zugänglich zu machen. Durch einfachen Luftzutritt bei Umgebungstemperatur oder erhöhten Temperaturen erfolgt die Aktivierung des Startersystems und damit die Reaktionsauslösung im Gesamtsystem zur formstabilen Aushärtung. Der für die formgebende Verarbeitung benötigte offene Zeitraum des Systems kann weitgehend frei bestimmt werden. Erfindungsgemäß zusammengestellte Mehrstoffsysteme bekommen damit praktische Bedeutung im weitesten anwendungstechnischen Sinn.

Im nachfolgenden werden zunächst die Hydrazon-Verbindungen und die weiteren Hauptkomponenten der erfindungsgemäß bevorzugt zu verwendenden Aktivatorsysteme im einzelnen beschrieben.

### Hydrazon-Verbindungen

Die erfindungsgemäß bevorzugt eingesetzten Hydrazonkomponenten entsprechen der nachfolgenden allgemeinen Formel I 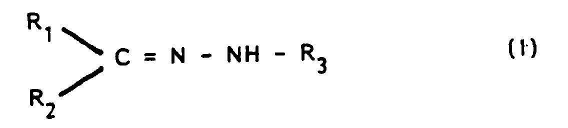 In dieser Ausführungsform haben die Reste R₁, R₂ und R₃ aus dieser allgemeinen Formel (I) die nachfolgende Bedeutung:
R₁ ist ein geradkettiger, verzweigter oder cyclischer und gegebenenfalls substituierter Alkylrest oder ein gegebenenfalls substituierter Arylrest.
R₂ kann in seiner Bedeutung gleich oder verschieden sein von dem Rest R₁ und ist dabei Wasserstoff, ein geradkettiger, verzweigter oder cyclischer und gegebenenfalls substituierter Alkylrest oder ein gegebenenfalls substituierter Arylrest.

In einer besonderen Ausführungsform können die Reste R₁ und R₂ auch zusammen mit dem gemeinsamen substituierten C-Atom einen cycloaliphatischen Rest bilden, der auch substituiert sein kann.

Der Rest R₃ ist wieder ein geradkettiger, verzweigter oder cyclischer und gegebenenfalls substituierter Alkylrest oder ein gegebenenfalls substituierter Arylrest.

Die Reste R₁, R₂ und R₃ können insgesamt oder wenigstens anteilsweise gleich sein, jeder dieser Reste kann sich aber auch von den beiden anderen Resten in seiner Struktur unterscheiden. Als Alkylreste kommen insbesondere geradkettige und/oder verzweigte Alkylreste mit bis zu 40 C-Atomen, vorzugsweise bis zu etwa 20 C-Atomen, in Betracht. Cyclische Reste bestimmen sich in ihrer Mindestkohlenstoffzahl durch die Stabilität des jeweiligen Ringsystems. Eine bevorzugte Untergrenze liegt hier bei 5 und insbesondere bei 6 C-Atomen.

Die Reste R₁, R₂ und R₃ können unsubstituiert oder substituiert sein. Zu berücksichtigen ist hier, daß durch Substitution dieser Reste und insbesondere des Restes R₃ ein gewisser Einfluß auf die Reaktivität des Aktivatorsystems genommen werden kann. Liegt beispielsweise als Rest R₃ ein aromatisches System, insbesondere ein Phenylrest vor, so kann durch geeignete Substitution dieses Phenylrestes eine Reaktionsbeschleunigung dadurch erreicht werden, daß an sich bekannte Elektronenschiebende Substituenten an diesem Phenylrest in R₃ vorgesehen werden. Der bereits zitierte einschlägige Stand der Technik gibt darauf klare Hinweise, vergleiche hierzu beispielsweise die Literaturstelle Pausacker a.a.O. Seite 3480 Tabelle. Elektronen-schiebende und damit Reaktions-beschleunigenden Substituenten sind beispielsweise Alkyl-, Alkoxy- und/oder Halogensubstituenten am Phenylrest in R₃, umgekehrt wirken stark Elektronen-ziehende Substituenten von der Art der -NO₂-Gruppe verlangsamend auf den Reaktionsablauf ein. Zu solchen Elektronenschiebenden bzw. Elektronen-ziehenden Effekten durch Substitution und zur Struktur der jeweiligen Substituenten besteht umfangreiches allgemeines Fachwissen, auf das hier verwiesen wird.

Auch den Resten R₁ und R₂ aus der allgemeinen Formel I kann durch Wahl der jeweiligen Konstitution und der gegebenenfalls vorgesehenen Substitution die Geschwindigkeit des Reaktionsablaufes beeinflussende Wirkung zukommen. Auch hierzu kann auf die einschlägige und bereits genannte Literatur verwiesen werden, vergleiche hierzu die zitierte Veröffentlichung Criegee et al. a.a.O. Seite 222 sowie die im Rahmen dieser Tabelle zitierte Literatur.

Zur außerordentlichen Vielgestaltigkeit für die bestimmte Beschaffenheit der Reste R₁, R₂ und R₃ aus den Verbindungen der allgemeinen Formel I gibt die bereits benannte US-PS 4,010,152 mit ihren Formelbildern aus den Spalten 6 bis 14 Aufschluß. Dargestellt sind hier die Hydrazonverbindungen bereits in Form ihrer Hydroperoxide, wie sie sich auch erfindungsgemäß im Reaktionsablauf in situ bei Zutritt von Luftsauerstoff bilden. Die umfangreichen Angaben dieser zuletzt genannten Druckschrift zu der bestimmten Beschaffenheit der Hydrazonverbindungen bzw. der aus ihnen in situ entstehenden Hydroperoxide gelten für die Lehre der Erfindung im Zusammenhang mit der Definition der Verbindungen der allgemeinen Formel I. Aus Zweckmäßigkeitsgründen kann auf diese ausführliche druckschriftliche Darstellung im Zusammenhang mit der Erfindungsbeschreibung Bezug genommen werden.

### Im System wenigstens anteilsweise lösliche Metallverbindungen

Wie bereits ausgeführt, zeichnen sich die wichtigsten Trockenstoffe der betroffenen Art dadurch aus, daß vor allem Metallverbindungen solcher Metalle eingesetzt werden, die in mehreren Wertigkeitsstufen auftreten können. Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung zukommen. Bei Raumtemperatur hochaktive Komponenten leiten sich z. B. vom Kupfer, Kobalt, Vanadium und/oder Mangan ab. Verbindungen des Eisens kommt allerdings eine besondere Bedeutung und gute Reaktionsbeschleunigung zu.

Für das für viele Anwendungsgebiete besonders vorteilhafte Arbeiten bei Raumtemperatur eignen sich insbesondere Eisen-, Kobalt- und/oder Manganverbindungen, gegebenenfalls in Abmischung mit weiteren metallischen Komponenten wie Verbindungen des Blei, Cer, Calcium, Barium, Zink und/oder Zirkon. Es kann hier auf die einschlägige Fachliteratur verwiesen werden, vergleiche beispielsweise die zitierte Veröffentlichung in "Ullmann" a.a.O. sowie die dort zitierte Vor-Literatur.

Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate. Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungsgemäßen System eine deutlich beschleunigende Wirkung zeigt.

Es kann zweckmäßig sein, die Metallverbindungen jeweils in einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So kann beispielsweise Eisen auch in Form der Fe³⁺-Verbindungen verwendet werden.

### Reduktionsmittel mit Beschleuniger-Wirkung

Die erfindungsgemäß gewünschtenfalls mitverwendeten Aktivatorkomponenten der hier betroffenen Art sind die vielfältigen Mischungskomponenten mit Reduktionswirkung, wie sie in üblichen Redoxsystemen zur Polymerisationsauslösung eingesetzt werden. Verwiesen wird auf die einschlägige umfangreiche Literatur, beispielsweise W. Kern, Makromol. Chem. 1, 249 (1947) sowie C. Srna, Angew. makromol. Chem. 9, 165 (1969) sowie das allgemeine Fachwissen, wie es z. B. beschrieben ist in Houben Weyl "Methoden der organischen Chemie" Band 14/1, 263 bis 297.

Als besonders aktiv hat sich hier die Klasse der Alpha-Hydroxyketone, beispielsweise mit ihren Vertretern Butyroin, Benzoin oder Azetoin erwiesen, die Lehre der Erfindung ist jedoch keineswegs hierauf eingeschränkt. Auf die in den erfindungsgemäßen Beispielen dargestellten Modifikationen wird verwiesen. Wesentlich ist, daß diese Stoffklasse in den erfindungsgemäß eingesetzten Aktivatorsystemen zwar eine wichtige reaktionsbeschleunigende Funktion übernehmen können, daß jedoch ihre Mitverwendung nicht zwingend ist.

Starter bzw. Aktivatorsysteme aus den hier geschilderten Hauptkomponenten Hydrazonverbindung, wenigstens anteilsweise löslicher metallischer Trockenstoff und/oder gewünschtenfalls mitverwendeter Beschleuniger sind in der Lage, nach Aufnahme von Umgebungsluft alle die radikalisch polymerisierbaren olefinisch ungesättigten Systeme zu initiieren, die bisher mit den verschiedenartigsten insbesondere peroxidischen Startersystemen eingesetzt werden. Zur Definition der weiteren Bestandteile der erfindungsgemäß beschriebenen formgebend verarbeitbaren radikalisch polymerisierbaren Mehrstoffgemische kann insoweit auf die umfangreichen Angaben der einschlägigen Literatur Bezug genommen werden, die sich mit der Herstellung und Verarbeitung von Systemen beschäftigt, die auf Basis olefinisch ungesättigter radikalisch polymerisierbarer Verbindungen aufgebaut sind. In der Fachwelt steht heute eine außerordentlich große Zahl von Stoffsystemen dieser Art zur Verfügung, die auf den jeweiligen Einsatzzweck in ihren Eigenschaften zugeschnitten sind. Olefinisch ungesättigte Reaktivsysteme können dabei auf der Grundlage ausgewählter radikalisch polymerisierbarer ethylenisch ungesättigter Verbindungen oder auf Basis von Mischungen mehrerer Typen solcher Verbindungen aufgebaut sein. Die ethylenisch ungesättigten polymerisierbaren Komponenten können dabei einfunktionelle Verbindungen und/oder mehrfunktionelle Reaktivkomponenten sein.

Für eine Polymerisationsauslösung mittels des im erfindungsgemäßen Sinne aktivierten Luftsauerstoffs insbesondere bei Raumtemperatur oder erhöhten Temperaturen eignen sich besonders Systeme, die sich bereits beim Einsetzen der Polymerisationsreaktion durch wenigstens leicht erhöhte Viskositätswerte auszeichnen. Versuche haben tatsächlich gezeigt, daß die Verwendung der Umgebungsluft auch beim Einsatz einer an sich hoch aktiven Kombination von Aktivatorwirkstoffen dann nicht oder wenigstens nicht im gewünschten Zeitraum zur Reaktionsauslösung führt, wenn hoch-mobile ungesättigte Systeme eingesetzt werden, auch wenn diese an sich für ihre hohe Reaktivität in der Polymerisationsreaktion bekannt sind. Typische Beispiele für solche Systeme sind in üblicher Weise stabilisierte niedere Acrylatester, Methacrylatester oder Styrol.

Allgemein gilt dementsprechend, daß erfindungsgemäß radikalisch polymerisierbare Systeme verwendet werden sollten, die eine Anfangsviskosität von wenigstens etwa 30 bis 100 mPas, bevorzugt von wenigstens etwa 200 oder 300 mPas aufweisen. Ein besonders sicheres Anspringen der Polymerisationsreaktion kann bei Systemen erwartet werden, deren Anfangsviskosität wenigstens etwa 500 mPas und insbesondere wenigstens etwa 1000 mPas beträgt. Alle diese Viskositätswerte sind bestimmt als Brookfield-Viskosität. Handelsübliche Klebstoffsysteme zeigen bekanntlich Viskositäten von wenigstens etwa 3000 mPas und insbesondere Viskositätswerte im Bereich bis etwa 10000 mPas. Materialien dieser Art sind verständlicherweise für die Verarbeitung im Sinne der Erfindung hervorragend geeignet. Die Erfindung ist aber darauf keineswegs eingeschränkt. Auch wesentlich dünner-viskose Systeme beispielsweise streichfähige Lacksysteme - die insbesondere als lösungsmittelfreie Systeme Verwendung finden - sind für den Mechanismus der hier beschriebenen Reaktionsauslösung geeignet, sofern die geschilderten Mindestwerte für die Anfangsviskosität des formgestaltend zu verarbeitenden Materials eingehalten werden. Entsprechendes gilt für andere Einsatzgebiete, beispielsweise für die Herstellung von Kunststofformteilen auf der Basis von Styrol/ungesattigten Polyesterharzen.

Die erforderlichen Anfangsviskositätswerte können insbesondere durch Stoffgemische eingestellt werden, die einen hinreichenden Gehalt an oligomeren und/oder polymeren Komponenten gegebenenfalls in Abmischung mit niedermolekularen ungesättigten, bei Raumtemperatur flüssigen Komponenten wie (Meth)acrylate aufweisen. Entsprechend viskose Massen können aber auch ausschließlich aus Vorkondensaten geeigneter Fließfähigkeit bestehen. Im einzelnen gilt hier das umfangreiche Wissen der Fachwelt zu solchen durch Radikalpolymerisation härtbaren ethylenisch ungesättigten Stoffgemischen.

Die erfindungsgemäß einzusetzenden Mehrstoffgemische sind im allgemeinen als Einkomponentensysteme ausgebildet, die bis zum Einsatz vor Zutritt von Luft geschützt gehalten werden. Sie können allerdings auch als Mehrkomponentensysteme vorgesehen sein. Zum praktischen Einsatz des Systems werden dann die Komponenten miteinander vermischt. Die offene Topfzeit des Systems kann durch geeignete Auswahl und Anpassung der Hauptkomponenten des Aktivatorsystems geregelt werden, so daß also auch hier die Auslösung der Startreaktion und damit letztlich die Aushärtung des Systems unter Umgebungsbedingungen an der Luft möglich ist. In einer Ausführungsform der Erfindung liegen die betroffenen Mehrstoffgemische aus Aktivatorsystem und polymerisierbaren Komponenten als auch bei Luftzutritt nicht-reaktives 2-Komponenten-Systeme vor. Hierbei ist es dann besonders bevorzugt, die Hauptkomponenten der erfindungsgemäß eingesetzten Aktivatorsysteme so voneinander zu trennen, daß die Hydrazon-Verbindung getrennt von den Metallverbindungen gehalten ist. Beide Komponenten können dann im allgemeinen ethylenisch ungesättigte Reaktivmasse enthalten. Zur Verarbeitung bedarf es nur der Vermischung dieser beiden getrennt gehaltenen Komponenten, der Formgebung während der offenen Topfzeit des Systems und des Zutritts der Umgebungsluft.

Die Erfindung erlaubt jeweils die Zusammenstellung optimierter Wirkstoffgemische. Unter Wahrung der erfindungsgemäßen Gesetzmäßigkeiten können lösliche und/oder unlösliche Füllstoffe, Elastifizierungsmittel, Verdickungsmittel, Thixotropierungsmittel, Pigmente, Haftvermittler, Stabilisatoren und dergleichen mitverwendet werden, ohne daß die Funktionsfähigkeit des erfindungsgemäßen Aktivatorsystems gefährdet ist. Voraussetzung hierfür ist natürlich, daß durch Auswahl der Hilfs- und Füllstoffe sichergestellt ist, Störungen in der Interaktion der Aktivatorkomponenten auszuschließen. Hierzu gilt allgemeines chemisches Wissen.

In den Mehrstoffgemischen der Erfindung machen die Aktivatorgemische bevorzugt nicht mehr als etwa 15 Gew.-% und insbesondere nicht mehr als etwa 10 Gew.-% - jeweils bezogen auf das Gewicht des Gesamtsystems - aus. Je nach Aktivität der eingesetzten Komponenten kann dabei das Gewicht des Aktivatorgemisches sehr stark abgesenkt werden und beispielsweise bis in den Bereich von etwa 0,1 Gew.-% oder wenigstens etwa 0,5 Gew.-% verringert werden. Besonders geeignet können Mengen des Aktivatorsystems von wenigstens etwa 1 Gew.-% bevorzugt bis zu etwa 8 Gew.-% sein. Alle diese Angaben beziehen sich dabei einerseits auf das Gesamtgewicht des erfindungsgemäßen Mehrstoffsystems und das Gesamtgewicht der drei Hauptkomponenten des Aktivatorsystems.

Die drei zuvor genannten Komponenten des Aktivatorsystems können dabei vorzugsweise in den folgenden Mengenverhältnissen eingesetzt werden - hier Gew.-% bezogen auf das Gesamtsystem:

Hydrazon-Verbindungen: wenigstens etwa 0,1 Gew.-%, zweckmäßig 0,5 bis 7,5 Gew.-%, vorzugsweise 1 bis 4 Gew.-%
Metall aus löslicher Metallverbindung: 0 bis einige Gew.-%, zweckmäßig etwa 50 ppm bis 1 Gew.-%, vorzugsweise mehr als 100 ppm, z. B. 1000 bis 5000 ppm
Reduktionsmittel: 0 bis 5 Gew.-%, vorzugsweise 1 bis 3 Gew.-%

Zur Steuerung des Reaktionsablaufs und/oder der offenen Topfzeit können in an sich bekannter Weise Inhibitoren, Reduktionsmittel und/oder Stabilisatoren gegen vorzeitige Auslösung der radikalischen Reaktion mitverwendet werden. Ihre Menge bemißt sich nach dem angegebenen Zweck. Sie kann im Einzelfall durch fachgerechte Überlegungen und/oder durch Vorversuche einfach ermittelt werden. Die mitverwendeten Regulatoren werden üblicherweise wenige Prozent - z. B. etwa 2 bis 5 Gew.-% - des Gesamtgemisches nicht überschreiten und liegen im allgemeinen unterhalb 1 Gew.-%.

Zur Inhibierung der erfindungsgemäßen Systeme stehen in an sich bekannter Weise mehrere Mechanismen zur Verfügung. Genannt seien die beiden folgenden Grundtypen:
1. Stabilisierung gegen O₂, Zusatz von Antioxidantien und
2. Stabilisierung gegen Radikale, Zusatz von Radikalinhibitoren

Aus dem allgemeinen chemischen Wissen seien im nachfolgenden typische Stabilisatorkomponenten aufgezählt, wobei jeweils in Klammern hinter der speziellen Verbindung angegeben ist, welchem Mechanismus der Stabilisator zuzuordnen ist:

Pyrogallol (1), O₂-inhibierte Acrylate (1), Hydrochinon (1,2), Hydrochinonmonomethylether (1,2), Butylhydroxytoluol (2) und Phenothiazin (2). Besondere Bedeutung zur Stabilisierung des Systems gegen unerwünschte vorzeitige Abreaktion kann Verbindungen vom Typ des Triphenylphosphins zukommen.

Als in der Praxis vielseitig verwendbare und gebräuchliche Mischungen radikalisch polymerisierbarer Massen werden Stoffgemische von Oligomer- und/oder Polymersubstanzen zusammen mit ethylenisch ungesättigten Monomeren niederen Molekulargewichts eingesetzt. Die Mischungskomponenten höheren Molekulargewichts sind dabei häufig in den Monomeren wenigstens anteilsweise löslich. Stoffgemische dieser Art sind für die Verarbeitung im Sinne der Erfindung besonders geeignet. Der Gehalt an Monomeren - beispielsweise vom Typ (Meth)acrylate, des gegebenenfalls substituierten Styrols undloder des Acrylnitrils - liegt im allgemeinen bei wenigstens 10 Gew.-%, bevorzugt bei wenigstens etwa 20 Gew.-% und kann in vielen Anwendungsfällen wenigstens etwa 40 Gew.-% ausmachen, Gew.-% hier jeweils auf das reaktionsbereite fertige Gemisch bezogen. Die Monomerkomponente kann dabei die gewichtsmäßig gesehen weitaus überwiegende Komponente sein, so daß also beispielsweise 60 bis 80 Gew.-% der Gesamtmasse durch das niedermolekulare Monomere gebildet werden. Wie zuvor dargestellt ist hier allerdings darauf zu achten, daß durch die Mitverwendung einer hinreichenden Menge an Verbindungen höheren Molekulargewichts und/oder durch sonstige Eindickungsmittel die wenigstens leicht erhöhte Anfangsviskosität der Stoffgemische zur sicheren Reaktionsauslösung bei Luftzutritt gewährleistet ist.

In charakteristischen Anwendungsbeispielen, die als bevorzugte Ausführungsformen in den Rahmen der Erfindung fallen, sind diese Einsatzbedingungen ohnehin gewährleistet. Ohne einen Anspruch auf Vollständigkeit seien hier die folgenden Beispiele genannt: Aerob härtende Klebstoffsysteme, streichfähige Mittel für die Oberflächenbeschichtung mit polymerisierbaren insbesondere lösungsmittelfreien Lacken und Anstrichmittel im Sinne von streichfähigen lufttrocknenden Lacksystemen sowie die Herstellung von Formteilen unter Reaktionsauslösung durch Einwirkung von Umgebungsluft, beispielsweise auf Basis von Styrol/ungesättigte Polyesterharze.

### Beispiele

Für die nachfolgenden Beispiele wurden die ethylenisch ungesättigten Verbindungen (nachfolgend auch Monomere genannt) von evtl. vorhandenen Inhibitoren befreit und, soweit möglich, destillativ gereinigt. Bei schwerflüchtigen, nicht destillierbaren Monomeren wurde durch Evakuieren und anschließendes mehrstündiges Durchleiten N₂ gelöster Sauerstoff entfernt. Die Monomeren wurden unter Inertgas (N₂ oder Ar) gelagert und entnommen.

Die Hydrazone wurden nach literaturbekannten Vorschriften hergestellt (siehe z. B. Houben-Weyl, "Methoden der organischen Chemie", Bd. X/2) und unter Inertgas gelagert und entnommen.

Zur Bestimmung der Aushärtungszeit der polymerisationsfähigen Mehrstoffgemische werden 100 mg der unter Inertgas formulierten Mischung in einem Uhrglas der Umgebungsluft ausgesetzt. Die Mischung ist dann ausgehärtet, wenn sich die gesamte Probenmenge in einen thermoplastischen oder duroplastischen Festkörper umgewandelt hat.

Für Verklebungen werden Prüfkörper nach DIN 53281 mit der polymerisierbaren Mischung versehen und vor dem Fügen eine definierte Zeit (90 bis 600 sec.) der Umgebungsluft ausgesetzt.

Die Zugscherprüfungen werden nach DIN 53283 an einschnittig überlappten (250 mm²) Proben durchgeführt.

### Beispiel 1

In einem mit N₂ gefüllten Mehrhalskolben werden 5,5 Gew.-Teile Methylmethacrylat (MMA) vorgelegt und darin 4,5 Gew.-Teile Plexigum MG 319 (Polyacrylat der Fa. Röhm) gelöst. Anschließend werden 0,13 Gew.-Teile Eisen-Acethylacetonat (Fe(acac)₃), 0,2 Gew.-Teile Butyroin, 0,1 Gew.-Teile Triphenylphosphin, 0,5 Gew.-Teile JPA 514 (mono-Methyacryloyloxyethylphosphat der Fa. Johoka Chemical Corp. Ltd.) und 0,3 Gew.-Teile Acetonphenylhydrazon zugegeben, wobei auf Ausschluß von Sauerstoff geachtet wird. Die homogenisierte Mischung wird auf - 196 °C abgekühlt, der Kolben evakuiert und anschließend auf Raumtemperatur erwärmt. Durch mehrmaliges Wiederholen dieses Gefrier/Tau-Zyklus wird restlicher Sauerstoff aus dem System entfernt. Anschließend wird das Gemisch unter Inertgas aufbewahrt.
Ablüftzeit: 90 sec.
Aushärtungszeit: 55 min.
Zugscherfestigkeiten:
Fe-Verklebungen: 23 N/mm²
PVC-Verklebungen: 5,6 N/mm²
(Materialbruch = MB)

### Beispiel 2

Es wird eingesetzt ein Gemisch aus

| | |
|---|---|
| 15 Gew.-Teile | Ethylenglykoldimethacrylat |
| 7,5 Gew.-Teile | Polyacrylat (Plexigum MB 319 der Fa. Röhm) |
| 0,45 Gew.-Teile | Butyroin |
| 0,3 Gew.-Teile | Eisen-Acetylacetonat (Fe(acac)₃) |
| 0,68 Gew.-Teile | Acetonphenylhydrazon |

Die Mischungskomponenten dieses Beispiels und der nachfolgenden Beispiele werden wie in Beispiel 1 angegeben miteinander gemischt. Die Ablüftzeit beträgt 90 sec. Die Aushärtung tritt nach 60 Minuten bei Kontakt mit Luft-Sauerstoff ein.

### Beispiele 3 bis 7

Es wird eingesetzt ein Gemisch aus

| | |
|---|---|
| 5,5 Gew.-Teile | MMA (Methylmethacrylat) |
| 4,5 Gew.-Teile | Plexigum MB 319 |
| 0,25 Gew.-Teile | Methacrylsäure |
| 0,3 Gew.-Teile | Acetonphenylhydrazon |
| 0,13 Gew.-Teile | Fe(acac)₃ |

Es werden eine Reihe verschiedener Reduktionsmittel zugesetzt. In der nachfolgenden Tabelle sind diese Reduktionsmittel, die zugesetzte Menge und die Aushärtungszeit zusammengefaßt.

| Reduktionsmittel | (Gew.-Teile) | Aushärtungszeit |
|---|---|---|
| Natriumsulfinat* | 0,25 | 80 Minuten |
| o-Benzosulfimid | 0,26 | 70 Minuten |
| Ascorbinsäure* | 0,25 | 45 Minuten |
| SH-terminiertes PUR | 0,2 | 180 Minuten |
| Triethylphosphit | 0,23 | 120 Minuten |

| | | |
|---|---|---|
| * nicht vollständig gelöst | | |

### Beispiele 8 bis 10

Es wird eingesetzt ein Gemisch aus

| | |
|---|---|
| 5,5 Gew.-Teile | MMA (Methylmethacrylat) |
| 4,5 Gew.-Teile | Plexigum MB 319 |
| 0,3 Gew.-Teile | Acetonphenylhydrazon |
| 0,13 Gew.-Teile | Fe(acac)₃ |

Es werden eine Reihe verschiedener Reduktionsmittel zugesetzt. In der nachfolgenden Tabelle sind diese Reduktionsmittel, die zugesetzte Menge und die Aushärtungszeit zusammengefaßt.

| Reduktionsmittel | (Gew.-Teile) | Aushärtungszeit |
|---|---|---|
| Butyroin | 0,2 | 30 Minuten |
| Benzoin | 0,2 | 90 Minuten |
| Acetoin | 0,2 | 72 Minuten |

### Beispiele 11 bis 15

Es wird eingesetzt ein Gemisch aus

| | |
|---|---|
| 5,5 Gew.-Teile | MMA (Methylmethacrylat) |
| 4,5 Gew.-Teile | Plexigum MB 319 |
| 0,2 Gew.-Teile | Butyroin |
| 0,3 Gew.-Teile | Acetonphenylhydrazon |

Diese Grundrezeptur wird mit einer Reihe unterschiedlicher Metallverbindungen wie folgt versetzt:
Cu-Octoat (500, 1000 und 2000 ppm Cu)
Aushärtungszeit: 75 Minuten

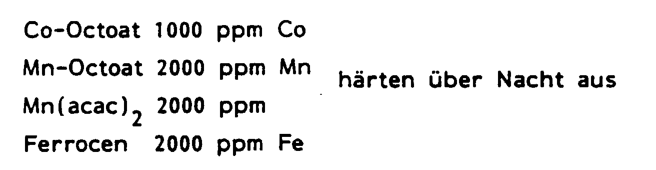

### Beispiel 16

Es wird eingesetzt ein Gemisch aus

| | |
|---|---|
| 5,5 Gew.-Teile | MMA (Methylmethacrylat) |
| 4,5 Gew.-Teile | Plexigum MB 319 |
| 0,3 Gew.-Teile | Acetonphenylhydrazon |
| 0,02 Gew.-Teile | Vanadium-Beschleuniger VN-2 der Fa. Akzo (in Tributylphosphit); Aushärtungszeit: 2 Stunden |

### Beispiele 17 bis 19

Es wird eingesetzt ein Gemisch aus

| | |
|---|---|
| 0,13 Gew.-Teile | Fe(acac)₃ |
| 0,3 Gew.-Teile | Acetonphenylhydrazon |
| 0,2 Gew.-Teile | Butyroin |
| 10 Gew.-Teile | Monomermischung (siehe nachfolgende Tabelle) |

| Monomermischung | Aushärtungszeit |
|---|---|
| Triethylenglykoldimethacrylat Plexigum MB 319 7 : 3 | 60 Minuten |
| | |
| Cyclohexylmethacrylat Plexigum MB 319 7 : 3 | 120 Minuten |
| | |
| Phenoxyethylmethacrylat Plexigum MB 319 7 : 3 | 120 Minuten |

### Beispiele 20 bis 22

Es wird eingesetzt ein Gemisch aus

| | |
|---|---|
| 0,13 Gew.-Teile | Fe(acac)₃ |
| 0,3 Gew.-Teile | Phenylhydrazon (siehe Tabelle) |
| 0,2 Gew.-Teile | Butyroin |
| 5,5 Gew.-Teile | MMA |
| 4,5 Gew.-Teile | Plexigum MB 319 |

In diesem Gemisch werden drei unterschiedliche Phenylhydrazone eingesetzt und die jeweilige Härtungszeit bestimmt:

| Phenylhydrazon des | Härtungszeit |
|---|---|
| Methylethylketon | 40 Minuten |
| Cyclohexanon | 15 Minuten |
| Acetophenon | 60 Minuten |

### Beispiel 23

| | |
|---|---|
| 16,7 Gew.-Teile | MMA |
| 3,3 Gew.-Teile | Plexidon M 449 (PMMA der Fa. Röhm) |
| 0,5 Gew.-Teile | Saccharin |
| 0,6 Gew.-Teile | Acetonphenylhydrazon |
| 0,03 Gew.-Teile | Triphenylphosphin |

werden analog Beispiel 1 gemischt.

| | |
|---|---|
| Ablüftzeit: | 90 sec. |
| Aushärtungszeit: | 60 min. |
| Zugscherfestigkeit (PVC-Verklebung): | 6,2 N/mm² (MB) |

### Beispiel 24

| | |
|---|---|
| 19 Gew.-Teile | MMA |
| 3,3 Gew.-Teile | Plexidon M 449 (PMMA der Fa. Röhm) |
| 0,26 Gew.-Teile | Fe(acac)₃ |
| 0,4 Gew.-Teile | Butyroin |
| 0,6 Gew.-Teile | p-Methoxyphenylhydrazon |

werden analog Beispiel 1 gemischt.

| | |
|---|---|
| Ablüftzeit: | 90 sec. |
| Aushärtungszeit: | 45 min. |
| Zugscherfestigkeit (PVC-Verklebung): | 11 N/mm² (MB) |

### Beispiel 25

| | |
|---|---|
| 16,7 Gew.-Teile | MMA |
| 3,3 Gew.-Teile | Plexidon M 449 (PMMA der Fa. Röhm) |
| 0,03 Gew.-Teile | Triphenylphosphin |
| 0,6 Gew.-Teile | Acetonphenylhydrazon |

werden analog Beispiel 1 gemischt.

| | |
|---|---|
| Ablüftzeit: | 90 sec. |
| Aushärtungszeit: | 90 min. |
| Zugscherfestigkeit (PVC-Verklebung): | 6 N/mm² |

### Beispiel 26

| | |
|---|---|
| 16 Gew.-Teile | MMA |
| 6,2 Gew.-Teile | Hypalon 20 (chlorsulfoniertes Polyethylen der Fa. DuPont) |
| 0,4 Gew.-Teile | Butyroin |
| 0,3 Gew.-Teile | Fe(acac)₃ |
| 0,6 Gew.-Teile | Acetonphenylhydrazon |

werden analog Beispiel 1 gemischt.

| | |
|---|---|
| Ablüftzeit: | 90 sec. |
| Aushärtungszeit: | 60 min. |
| Zugscherfestigkeit (PVC-Verklebung): | 5,3 N/mm² (MB) |

### Beispiel 27

| | |
|---|---|
| 5,5 Gew.-Teile | MMA |
| 4,5 Gew.-Teile | Plexigum MB 319 |
| 6,2 Gew.-Teile | Butyroin |
| 0,13 Gew.-Teile | Fe(acac)₃ |
| 0,3 Gew.-Teile | Aceton-t-butylhydrazon |

werden analog Beispiel 1 gemischt.

| | |
|---|---|
| Ablüftzeit: | 90 sec. |
| Aushärtungszeit: | 33 min. |
| Zugscherfestigkeit (PVC-Verklebung): | 6,9 N/mm² (MB) |

### Beispiel 28

| | |
|---|---|
| 20 Gew.-Teile | Tetrahydrofufurylmethacrylat |
| 10 Gew.-Teile | Plexigum MB 319 |
| 0,6 Gew.-Teile | Butyroin |
| 0,4 Gew.-Teile | Fe(acac)₃ |
| 0,08 Gew.-Teile | Triphenylphosphin |
| 0,9 Gew.-Teile | Acetonphenylhydrazon |

werden analog Beispiel 1 gemischt.

| | |
|---|---|
| Ablüftzeit: | 19 min. |
| Aushärtungszeit: | 90 min. |
| Zugscherfestigkeit (PVC-Verklebung): | 5,7 N/mm² (MB) |

## Patentansprüche

1. Verwendung von Alkyl-, Cycloalkyl- und/oder Aryl-Hydrazonen aliphatischer, cycloaliphatischer und/oder aromatischer Aldehyde und/oder Ketone (Hydrazon-Verbindungen), die zur Ausbildung von Hydroperoxiden befähigt sind und in Abmischung mit radikalisch polymerisierbaren Systemen auf Basis olefinisch ungesättigter Verbindungen vorliegen, als Starter oder Hauptkomponente in Startersystemen für die Aushärtung der olefinisch ungesättigten Verbindungen durch radikalische Polymerisation mittels Umgebungsluft, ohne daß ein Peroxid zugesetzt oder aktivierendes Licht verwendet wird.

2. Ausführungsform nach Anspruch 1, dadurch gekennzeichnet, daß die Hydrazonverbindungen zusammen mit im System wenigstens anteilsweise löslichen Metallverbindungen für die Trocknungsbeschleunigung ungesättigter Öle und/oder Reduktionsmitteln mit Beschleunigerwirkung für die radikalische Polymerisation eingesetzt werden und dabei insbesondere zur zeitgesteuerten Aushärtung vorbestimmbarer Topfzeit mittels Umgebungsluft bei Raumtemperatur und/oder erhöhten Temperaturen von formgebend verarbeitbaren Mehrstoffgemischen, bevorzugt im Zuge ihrer formgebenden Verarbeitung, Verwendung finden, die die radikalisch polymerisierbaren olefinisch ungesättigten Komponenten gewünschtenfalls auch zusammen mit gelösten und/oder ungelösten Füll- und/oder Hilfsstoffen enthalten.

3. Ausführungsform nach Ansprüchen 1 und 2, dadurch gekennzeichnet, daß die Mehrstoffgemische als fließfähiges, bevorzugt als wenigstens schwach angedickt streichfähiges bis pastös verteilbares Material ausgebildet sind.

4. Ausführungsform nach Ansprüchen 1 bis 3, dadurch gekennzeichnet, daß die Mehrstoffgemische bei der formgebenden Verarbeitung mit Viskositäten (Brookfield) von wenigstens etwa 30 bis 100 mPas, insbesondere von wenigstens etwa 300 mPas eingesetzt werden.

5. Ausführungsform nach Ansprüchen 1 bis 4, dadurch gekennzeichnet, daß Hydrazon-Verbindungen der allgemeinen Formel (I) eingesetzt werden 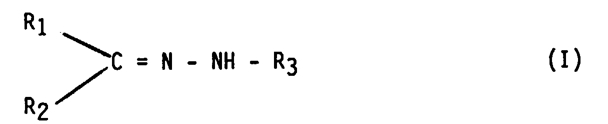 in der die Reste R₁, R₂ und R₃ wenigstens anteilsweise gleich oder verschieden sind und die nachfolgende Bedeutung haben:
R₁: ein geradkettiger, verzweigter oder cyclischer und gegebenenfalls substituierter Alkylrest oder ein gegebenenfalls substituierter Arylrest,
R₂: Wasserstoff, ein geradkettiger, verzweigter oder cyclischer und gegebenenfalls substituierter Alkylrest oder ein gegebenenfalls substituierter Arylrest,
wobei R₁ und R₂ zusammen mit dem gemeinsam substituierten C-Atom auch einen cycloaliphatischen Rest bilden können, der auch substituiert sein kann.
R₃: ein geradkettiger, verzweigter oder cyclischer und gegebenenfalls substituierter Alkylrest oder ein gegebenenfalls substituierter Arylrest.

6. Ausführungsform nach Ansprüchen 1 bis 5, dadurch gekennzeichnet, daß als im System wenigstens anteilsweise lösliche Metallverbindungen solche des Eisens, des Kupfers, des Kobalts und/oder des Mangans vorliegen, wobei der Einsatz löslicher Verbindungen des 2- und/oder 3-wertigen Eisens bevorzugt ist.

7. Ausführungsform nach Ansprüchen 1 bis 5, dadurch gekennzeichnet, daß als Beschleuniger übliche Mischungskomponenten mit Reduktionspotential aus Radikalpolymerisationen auslösenden Redox-Systemen eingesetzt werden.

8. Ausführungsform nach Ansprüchen 1 bis 7, dadurch gekennzeichnet, daß Mehrstoffgemische eingesetzt und formgebend verarbeitet werden, in denen das Startergemisch nicht mehr als etwa 15 Gew.-% vorzugsweise nicht mehr als etwa 10 Gew.-% des Gesamtsystems ausmacht und dabei bevorzugt wenigstens 0,1 Gew.-% und insbesondere etwa 1 bis 3 Gew.-% des Gesamtsystems beträgt.

9. Ausführungsform nach Ansprüchen 1 bis 8, dadurch gekennzeichnet, daß die Komponenten des Startersystems in den folgenden Konzentrationen - bezogen jeweils auf Gesamtmischung - zum Einsatz kommen:
Hydrazon-Verbindungen: wenigstens etwa 0,1 Gew.-%, zweckmäßig 0,5 bis 7,5 Gew.-%, vorzugsweise 1 bis 4 Gew.-%
Metall aus löslicher Metallverbindung: 0 bis einige Gew.-%, zweckmäßig 50 ppm bis 1 Gew.-%, vorzugsweise 1000 bis 5000 ppm
Reduktionsmittel: 0 bis 5 Gew.-%, vorzugsweise 1 bis 3 Gew. -%

10. Ausführungsform nach Ansprüchen 1 bis 9, dadurch gekennzeichnet, daß als Reduktionsmittel mit Beschleunigerwirkung Alpha-Hydroxyketone eingesetzt werden.

11. Ausführungsform nach Ansprüchen 1 bis 10, dadurch gekennzeicnnet, daß ein- und/oder mehrfunktionell ethylenisch ungesättigte polymerisierbare Komponenten und dabei bevorzugt Acrylat- und/oder Methacrylat- Verbindungen bzw. -Systeme, Styrol bzw. Styrolderivate und/oder Acrylnitril enthaltende Komponenten verwendet werden, die auch ganz oder teilweise in Form reaktiver vorgebildeter Oligomer- und/oder Polymerverbindungen vorliegen können.

12. Ausführungsform nach Ansprüchen 1 bis 11, dadurch gekennzeichnet, daß zusätzlich im System lösliche undloder unlösliche Füllstoffe, Verdickungsmittel, Elastifizierungsmittel, Pigmente, Haftvermittler, Stabilisatoren und/oder weitere Hilfsstoffe enthaltende Mehrstoffsysteme verwendet werden.

13. Ausführungsform nach Ansprüchen 1 bis 2, dadurch gekenzeichnet, daß zur Stabilisierung gegen unerwünschten Sauerstoffzutritt und/oder zur Regulierung der Topfzeit Antioxidantien, Reduktionsmittel und/oder Radikalinhibitoren enthaltende Stoffgemische eingesetzt werden.

14. Ausführungsform nach Ansprüchen 1 bis 13, dadurch gekennzeichnet, daß Systeme eingesetzt werden, deren Gehalt an radikalisch polymerisierbaren Komponenten wenigstens etwa 20 Gew.-% und bevorzugt wenigstens etwa 40 Gew.-% beträgt.

15. Verwendung der Startersysteme gemäß Anspruch 1 zur Aushärtung von Reaktivklebern durch Einwirkung von Umgebungsluft insbesondere bei Umgebungstemperatur, wobei die Reaktivkleber bevorzugt auf Basis pastöser Massen aufgebaut sind, die Reaktivkomponenten auf Acrylat- und/oder Methacrylatbasis insbesondere in Abmischung mit wenigstens teilweise darin löslichen Polymeren enthalten und bevorzugt Viskositätswerte oberhalb 500 mPas, insbesondere im Bereich von etwa 3000 bis 10000 mPas aufweisen.

16. Verwendung der Startersysteme nach Anspruch 1 zur Aushärtung von Oberflächenbeschichtungen, die insbesondere als lufttrocknendes Lacksystem vorliegen oder zur Ausbildung von Kunststoff-Formteilen, jeweils durch Einwirkung von Umgebungsluft und insbesondere bei Umgebungstemperatur.

17. Formgebend verarbeitbare radikalisch polymerisierbare Mehrstoffgemische enthaltend ethylenisch ungesättigte polymerisierbare Verbindungen gewünschtenfalls in Abmischung mit löslichen und/oder unlöslichen Füll- und/oder sonstigen Hilfsstoffen sowie ein durch Sauerstoffzutritt initiierbares Aktivatorsystem, dadurch gekennzeichnet, daß kein Peroxid zugesetzt wird, und daß kein aktivierendes Licht verwendet wird und daß diese Mehrstoffgemische in Applikationsform als wenigstens schwach angedicktes Material vorliegen und ein durch Zutritt von Sauerstoff, insbesondere durch Einwirkung von Umgebungsluft initiierbares Aktivatorsystem auf Basis der nachfolgenden Hauptkomponenten enthalten:
Hydrazon-Verbindungen von aliphatischen, cycloaliphatischen und/oder aromatischen Aldehyden und/oder Ketonen, vorzugsweise Hydrazonverbindungen der allgemeinen Formel (I), 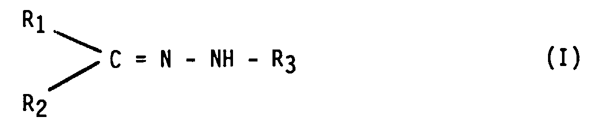 in der die Reste R₁, R₂ und R₃ wenigstens anteilsweise gleich oder verschieden sind und die nachfolgende Bedeutung haben:
R₁: ein geradkettiger, verzweigter oder cyclischer und gegebenenfalls substituierter Alkylrest oder ein gegebenenfalls substituierter Arylrest,
R₂: Wasserstoff, ein geradkettiger, verzweigter oder cyclischer und gegebenenfalls substituierter Alkylrest oder ein gegebenenfalls substituierter Arylrest,
wobei R₁ und R₂ zusammen mit dem gemeinsam substituierten C-Atom auch einen cycloaliphatischen Rest bilden können, der auch substituiert sein kann.
R₃: ein geradkettiger, verzweigter oder cyclischer und gegebenenfalls substituierter Alkylrest oder ein gegebenenfalls substituierter Arylrest, sowie
gewünschtenfalls zusammen mit
im System wenigstens anteilsweise löslichen Metallverbindungen für die Trocknungsbeschleunigung ungesättigter Öle und/oder Reduktionsmitteln mit Beschleuniger-Wirkung für die radikalische Polymerisationsauslösung.

18. Mehrstoffgemische nach Anspruch 17, dadurch gekennzeichnet, daß sie in Applikationsform eine Mindestviskosität (Brookfield) von wenigstens etwa 100 mPas, bevorzugt von wenigstens etwa 300 mPas und insbesondere von wenigstens etwa 500 mPas aufweisen.

## Claims

1. The use of alkyl, cycloalkyl and/or aryl hydrazones of aliphatic, cycloaliphatic and/or aromatic aldehydes and/or ketones (hydrazone compounds), which are capable of forming hydroperoxides and which are present in admixture with radical-polymerizable systems based on olefinically unsaturated compounds, as starters or as the principal component of starter systems for the curing of olefinically unsaturated compounds by radical polymerization with ambient air without the addition of a peroxide or the use of activating light.

2. The use claimed in claim 1, characterized in that the hydrazone compounds are preferably used together with metal compounds at least partly soluble in the system for accelerating the drying of unsaturated oils and/or, together with reducing agents having an accelerating effect, for radical polymerization and, more particularly, for the time-controlled curing - in conjunction with a predetermined pot life - with ambient air at room temperature and/or elevated temperatures of mouldable multicomponent mixtures, preferably in the course of their moulding, which contain the radical-polymerizable olefinically unsaturated components, if desired together with dissolved and/or undissolved fillers and/or auxiliaries.

3. The use claimed in claims 1 and 2, characterized in that the multicomponent mixtures are in the form of a free-flowing, preferably at least slightly thickened, spreadable paste-like material.

4. The use claimed in claims 1 to 3, characterized in that the multicomponent mixtures have Brookfield viscosities of at least about 30 to 100 mPa.s and, more particularly, at least about 300 mPa.s for moulding.

5. The use claimed in claims 1 to 4, characterized in that the hydrazone compounds used correspond to general formula (I): 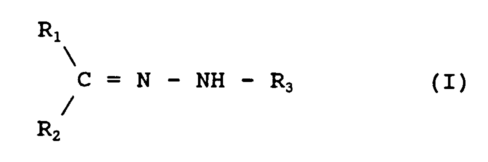 in which the substituents R₁, R₂ and R₃ are at least partly the same or different and have the following meanings:
R₁: a linear, branched or cyclic and optionally substituted alkyl radical or an optionally substituted aryl radical;
R₂: hydrogen, a linear, branched or cyclic and optionally substituted alkyl radical or an optionally substituted aryl radical,
in addition to which R₁ and R₂, together with the common substituted C atom, may form a cycloaliphatic radical which may even be substituted;
R₃: a linear, branched or cyclic and optionally substituted alkyl radical or an optionally substituted aryl radical.

6. The use claimed in claims 1 to 5, characterized in that compounds of iron, copper, cobalt and/or manganese are present as the metal compounds at least partly soluble in the system, the use of soluble compounds of divalent and/or trivalent iron being preferred.

7. The use claimed in claims 1 to 6, characterized in that typical mixture components with reduction potential of redox systems initiating radical polymerization reactions are used as accelerators.

8. The use claimed in claims 1 to 7, characterized in that multicomponent mixtures in which the starter mixture makes up no more than about 15% by weight and preferably no more than about 10% by weight of the system as a whole and preferably amounts to at least 0.1% by weight and, in particular, to about 1 to 8% by weight of the system as a whole are used and moulded as the multicomponent mixtures.

9. The use claimed in claims 1 to 8, characterized in that the components of the starter system are used in the following concentrations, based on the mixture as a whole: hydrazone compounds: at least about 0.1% by weight, best 0.5 to 7.5% by weight and preferably 1 to 4% by weight metal of soluble metal compound: 0 to a few percent by weight, best 50 ppm to 1% by weight and preferably 1,000 to 5,000 ppm
reducing agent: 0 to 5% by weight and preferably 1 to 3% by weight.

10. The use claimed in claims 1 to 9, characterized in that α-hydroxyketones are used as the reducing agent having an accelerator effect.

11. The use claimed in claims 1 to 10, characterized in that mono- and/or polyethylenically unsaturated polymerizable components, preferably components containing acrylate and/or methacrylate compounds or systems, styrene or styrene derivatives and/or acrylonitrile, which may even be completely or partly present in the form of reactive preformed oligomer and/or polymer compounds, are used.

12. The use claimed in claims 1 to 11, characterized in that multicomponent systems containing fillers, thickeners, elasticizing agents, pigments, coupling agents, stabilizers and/or other auxiliaries soluble and/or insoluble in the system are additionally used.

13. The use claimed in claims 1 to 12, characterized in that mixtures containing antioxidants, reducing agents and/or radical inhibitors are used for stabilization against unwanted contact with oxygen and/or for regulating pot life.

14. The use claimed in claims 1 to 13, characterized in that systems containing at least about 20% by weight and, preferably, at least about 40% by weight radical-polymerizable components are used.

15. The use of the starter systems claimed in claim 1 for curing reactive adhesives by contact with ambient air, particularly at ambient temperature, the reactive adhesives preferably being based on pastes which contain acrylate- and/or methacrylate-based reactive components, more particularly in admixture with polymers at least partly soluble therein, and which preferably have viscosity values above 500 mPa.s and, more particularly, in the range from about 3,000 to 10,000 mPa.s.

16. The use of the starter systems claimed in claim 1 for curing surface coatings which are present in particular as an air-drying lacquer system or for the production of plastic mouldings, in either case by contact with ambient air, particularly at ambient temperature.

17. Mouldable, radical-polymerizable multicomponent mixtures containing ethylenically unsaturated polymerizable compounds, optionally in admixture with soluble and/or insoluble fillers and/or other auxiliaries and an oxygen-initiated activator system, characterized in that no peroxide is added, in that no activating light is used and in that, in their application form, the multicomponent mixtures are present as an at least slightly thickened material and contain an activator system based on the following principal components which can be initiated by oxygen and, in particular, by contact with ambient air:
hydrazone compounds of aliphatic, cycloaliphatic and/or aromatic aldehydes and/or ketones, preferably hydrazone compounds corresponding to general formula (I): 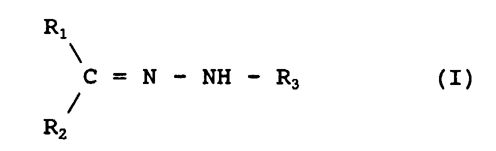 in which the substituents R₁, R₂ and R₃ are at least partly the same or different and have the following meanings:
R₁: a linear, branched or cyclic and optionally substituted alkyl radical or an optionally substituted aryl radical;
R₂: hydrogen, a linear, branched or cyclic and optionally substituted alkyl radical or an optionally substituted aryl radical,
in addition to which R₁ and R₂, together with the common substituted C atom, may form a cycloaliphatic radical which may even be substituted;
R₃: a linear, branched or cyclic and optionally substituted alkyl radical or an optionally substituted aryl radical, and optionally together with
metal compounds at least partly soluble in the system for accelerating the drying of unsaturated oils and/or reducing agents with an accelerator effect for the radical initiation of polymerization reactions.

18. Multicomponent mixtures as claimed in claim 17, characterized in that, in their application form, they have a minimum viscosity (Brookfield) of at least about 100 mPa.s, preferably at least about 300 mPa.s and, more preferably, at least about 500 mPa.s.

## Revendications

1. Utilisation d'alcoyl-, cycloalcoyl et/ou arylhydrazones d'aldéhydes et/ou de cétones aliphatiques, cycloaliphatiques et/ou aromatiques (dérivés d'hydrazone) qui sont aptes à la formation d'hydroperoxydes et qui se présentent en mélange avec des systèmes polymérisables par voie radicalaire à base de composés éthyléniquement non saturés, en tant que déclencheur ou de composant principal dans des systèmes de déclencheurs pour le durcissement des composés éthyléniquement non saturés par polymérisation radicalaire, au moyen de l'air environnant sans qu'on n'ajoute aucun peroxyde ou qu'on n'utilise de la lumière activante.

2. Mode d'exécution selon la revendication 1,
caractérisé en ce que
l'on met en jeu les dérivés d'hydrazone conjointement avec des composés métalliques au moins partiellement solubles dans le système, pour l'accélération par dessiccation des huiles non saturées, et/ou des agents réducteurs ayant une action accélératrice pour la polymérisation radicalaire et ainsi trouvent une utilisation en particulier pour le durcissement contrôlé par le temps, d'une période de fluidité prédéterminable, au moyen de l'air environnant à température ambiante et/ou à des températures accrues de mélanges à plusieurs substances façonnables par modelage, de préférence au cours de leur façonnage donnant la forme, qui renferment les composants oléfiniquement non saturés polymérisables par voie radicalaire, si on le désire aussi conjointement à des substances de charge et/ou auxiliaires dissoutes et/ou non dissoutes.

3. Mode d'exécution selon les revendications 1 et 2,
caractérisé en ce que
les mélanges à plusieurs substances sont formés comme produit fluide que l'on peut répartir de préférence comme produit au moins faiblement épaissi étalable à pâteux.

4. Mode d'exécution selon les revendications 1 à 3,
caractérisé en ce que
les mélanges à plusieurs substances sont mis en oeuvre lors du façonnage par modelage avec des viscosités (Brookfield) d'au moins environ 30 à 100 mPas en particulier d'au moins environ 300 mPas.

5. Mode d'exécution selon les revendications 1 à 4,
caractérisé en ce que
l'on met en oeuvre des dérivés d'hydrazone de formule générale I, 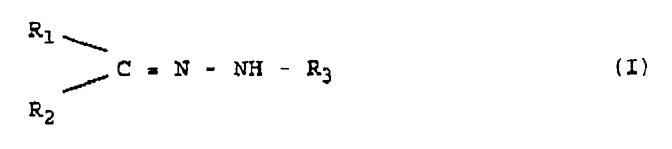 dans laquelle les radicaux R₁, R₂ et R₃ sont au moins partiellement, identiques ou différents et ont la signification suivante :
R₁ un radical alcoyle linéaire ramifié ou cyclique et éventuellement substitué,
R₂ de l'hydrogène, un radical alcoyle linéaire, ramifié ou cyclique et éventuellement substitué ou un radical aryle éventuellement substitué,
dans laquelle R₁ et R₂ ensemble avec l'atome de carbone substitué, peuvent former aussi un radical cycloaliphatique, qui peut également être substitué,
R₃ un radical alcoyle linéaire, ramifié ou cyclique et le cas échéant substitué ou un radical aryle éventuellement substitué.

6. Mode d'exécution selon les revendications 1 à 5,
caractérisé en ce que
comme composés métalliques au moins partiellement solubles dans le système, on introduit des composés du fer, du cuivre, du cobalt et/ou du manganèse parmi lesquels l'utilisation de composés solubles du fer bi- et/ou trivalent est préférée.

7. Mode d'exécution selon les revendications 1 à 5,
caractérisé en ce que
comme accélérateur on met en jeu des composants de mélange habituel ayant un potentiel de réduction provenant de systèmes redox qui font démarrer les polymérisations par voie radicalaire.

8. Mode d'exécution selon les revendications 1 à 7,
caractérisé en ce que
l'on met en jeu des mélanges à plusieurs substances, façonnables par modelage, dans lesquels le mélange de démarreurs ne représente pas plus d'environ 15 % en poids, de préférence pas plus d'environ 10 % en poids du mélange total et pour cela s'élève de préférence au moins à 0,1 % en poids et en particulier à environ 1 à 3 % en poids du système total.

9. Mode d'exécution selon les revendications 1 à 8,
caractérisé en ce que
les composants du système de démarreurs vient à utilisation dans les concentrations suivantes, rapporté à chaque fois au mélange total :
- dérivés d'hydrazone au moins environ 0,1 % en poids, de façon appropriée de 0,5 à 7,5 % en poids, de préférence de 1 à 4 % en poids,
- métal en composé métallique soluble : 0 à quelques % en poids, d'une manière appropriée de 50 ppm à 1 % en poids, de préférence de 1000 à 5000 ppm,
- agent réducteur : 0 à 5 % en poids, de préférence de 1 à 3 % en poids.

10. Mode d'exécution selon les revendications 1 à 9,
caractérisé en ce que
l'on met en jeu comme agent réducteur ayant une action accélératrice, des alpha-hydroxycétones.

11. Mode d'exécution selon les revendications 1 à 10,
caractérisé en ce que
l'on utilise des composants polymérisables éthyléniquement non saturés uni- et/ou plurifonctionnels et pour cela de préférence des composants contenant des dérivés ou des systèmes d'acrylate et/ou de méthacrylate ; du styrène ou des dérivés du styrène et/ou de l'acrylonitrile, qui peuvent se présenter aussi totalement ou partiellement sous la forme de composés oligomères et/ou polymères préformés réactifs.

12. Mode d'exécution selon les revendications 1 à 11,
caractérisé en ce qu'
en supplément on utilise des substances de charge solubles et/ou insolubles dans le système, des agents épaississants, des agents de flexibilité, des pigments, des adjuvants d'adhésion, des agents stabilisants et/ou des systèmes à plusieurs substances contenant d'autres adjuvants.

13. Mode d'exécution selon les revendications 1 à 12,
caractérisé en ce que
pour la stabilisation vis-à-vis d'une entrée d'oxygène non désirée et/ou pour la régulation de la durée de fluidité l'on met en oeuvre des mélanges d'antioxydants, d'agents réducteurs, et/ou d'inhibiteurs de radicaux.

14. Mode d'exécution selon les revendications 1 à 13,
caractérisé en ce que
l'on met en oeuvre des systèmes dont la teneur en composants polymérisables par voie radicalaire s'élève au moins à environ 20 % en poids et de préférence à au moins environ 40 % en poids.

15. Utilisation des systèmes de démarreurs conformément à la revendication 1, en vue du durcissement des colles réactives par action de l'air environnant en particulier à la température environnante, tandis que la colle réactive est constituée de préférence à base de masses pâteuses renfermant les composants réactifs à base d'acrylate et/ou de méthacrylate en particulier en mélange avec des polymères qui y sont au moins partiellement solubles et qui possèdent de préférence des valeurs de viscosité au-dessus de 500 mPas, en particulier dans la zone d'environ 3000 à 10.000 mPas.

16. Utilisation des systèmes de démarreurs selon la revendications 1, en vue du durcissement de revêtements de surfaces qui se présentent en particulier en tant que système de laques siccatifs à l'air ou en vue de la formation de pièces moulées en matière plastique, respectivement par action de l'air environnant et en particulier à la température environnante.

17. Mélanges de plusieurs substances polymérisables par voie radicalaire, façonnables par modelage, renfermant des composés polymérisables non saturés éthyléniquement en mélange avec des substances de charge solubles et/ou insolubles et/ou des adjuvants quelconques ainsi qu'un système d'activateurs que l'on peut déclencher par entrée d'oxygène,
caractérisés en ce que
l'on n'ajoute aucun peroxyde et en ce que l'on n'utilise aucune lumière activante et que ces mélanges à plusieurs substances se présentent dans la forme d'application comme matériau au moins faiblement épaissi et renferment un système d'activateurs déclenchable par entrée d'oxygène, en particulier par action de l'air environnant, à base des composants principaux suivants :
- dérivés d'hydrazone d'aldéhydes et/ou de cétones aliphatiques, cycloaliphatiques et/ou aromatiques, de préférence des dérivés d'hydrazone de formule générale (I), 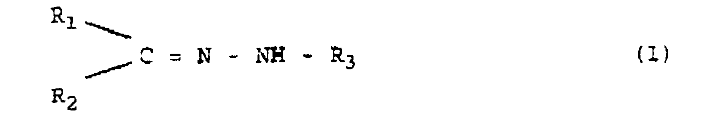 dans laquelle les radicaux R₁, R₂ et R₃ sont au moins partiellement identiques ou différents et ont la signification suivante :
R₁ un radical alcoyle linéaire ramifié ou cyclique et éventuellement substitué, ou un radical aryle éventuellement substitué
R₂ de l'hydrogène, un radical alcoyle linéaire, ramifié ou cyclique, et éventuellement substitué ou un radical aryle éventuellement substitué,
dans laquelle R₁ et R₂ ensemble avec l'atome de C substitué peuvent former également un reste cycloaliphatique, qui peut être également substitué,
R₃ un radical alcoyle linéaire, ramifié ou cyclique et le cas échéant substitué ou un radical aryle éventuellement substitué,
ainsi que, si désiré, conjointement à des dérivés métalliques au moins partiellement solubles dans le système en vue de l'accélération de la dessiccation d'huiles non saturées et/ou d'agents réducteurs ayant une action d'accélérateur pour le déclenchement de la polymérisation radicalaire.

18. Mélanges à plusieurs substances selon la revendications 17,
caractérisés en ce qu'
ils possèdent dans la forme d'application une viscosité minimale (Brookfield) d'au moins environ 100 mPas, de préférence d'au moins environ 300 mPas et en particulier d'au moins environ 500 mPas.
